# EUROPEAN PATENT SPECIFICATION

(11) **EP 2 717 439 B1**
(45) Date of publication and mention of the grant of the patent: **28.11.2018**
(21) Application number: 12794116.9
(22) Date of filing: 05.04.2012
(51) Int. Cl.: H02K 7/20, H02P 9/10, B64G 1/00, H02P 27/00, H02P 9/04

(54) **ELECTRIC ACTUATOR DRIVE DEVICE**
ELEKTRISCHE STELLANTRIEBSVORRICHTUNG
DISPOSITIF D'ENTRAÎNEMENT D'UN ACTIONNEUR ÉLECTRIQUE

(30) Priority: 03.06.2011 JP 2011125192
(43) Date of publication of application: 09.04.2014
(73) Proprietor: IHI Aerospace Co., Ltd., Koto-ku Tokyo 135-0061 (JP); Sinfonia Technology Co., Ltd., Tokyo 105-8564 (JP)
(72) Inventor: OYORI, Hitoshi, Tokyo 135-0061 (JP); WAKITA, Masaya, Tokyo 105-8564 (JP); SHIMOMURA, Yukio, Tokyo 105-8564 (JP)
(74) Representative: Wasner, Marita
(86) International application number: PCT/JP2012/059336
(87) International publication number: WO 2012/165043

(56) References cited:
- JP-A- 4 145 839
- JP-A- 2001 239 852
- JP-A- 2003 042 258
- JP-A- 2005 348 481
- JP-A- 2009 103 203
- JP-A- 2009 190 571

## Description

### Technical Field

The present invention relates to an electric actuator driver that is installed and used in a spacecraft for example.

### Background Art

One of this kind of electric actuator drivers is disclosed in Patent Literature 1 under the name of electric actuator. Fig. 9 is a view illustrating the configuration of this electric actuator disclosed in Patent Literature 1.

The conventional electric actuator disclosed in Patent Literature 1 includes a first motor 1 and a second motor 2, wherein on the first motor 1 (or on the second motor 2), a lead 4 of a ball screw 3 is provided coaxially with a motor rotating axis 1a (or a motor rotating axis 2a), and on the second motor 2 (or on the first motor 1), a nut 5 of the ball screw 3 is provided coaxially with the motor rotating axis 2a (or the motor rotating axis 1a), so that the first motor 1 and the second motor 2 are coupled to each other via the ball screw 3.

In the figure, the actuator is further provided with housings 6 and 7, a nut brake 8, and lead brake 9 and is mounted on a spacecraft R.

Patent Literature 2 describes a drive device for an expansion and contraction actuator which can drive the expansion and contraction actuator and expand and contract the same in an axial direction when a screw shaft is rotated.

### Citation List

### Patent Literature

Patent Literature 1: JP 2003-42258A
Patent Literature 2: JP 2009-103203A

### Summary of Invention

### Technical Problem

In the above-described electric actuator disclosed in Patent Literature 1, the manufacturing cost can be reduced because of its simple structure without degrading the power transmission efficiency and the reliability. However, if the electric actuator has a high deceleration ratio, it causes increased inertial load as well as increased consumption current during acceleration and increased regenerative current when the actuator comes to a stop.

Specifically, because the above-described conventional electric actuator is supplied with an electric current directly from a power supply unit, the power supply unit is required to be able to respond to a transient high instantaneous current that flows during acceleration. For this reason, there are still unsolved problems that a power supply unit has a large size, and the power-supply voltage of a spacecraft tends to fluctuate.

It is an object of the present invention to provide an electric actuator driver that can respond to a transient high instantaneous current flowing during acceleration / deceleration of an electric actuator, and that can also be reduced in size and weight.

### Solution to Problem

In order to solve the above problems, the present invention is an electric actuator driver comprising: an electric actuator; and a motor generator to drive the electric actuator; wherein the electric actuator driver further comprises: a motor generator driving means to rotate the motor generator at a rotation speed with which the motor generator supplies an instantaneous current which is consumption current of a power supply and regenerative current during acceleration / deceleration, that flows during acceleration / deceleration of the electric actuator.

In this configuration, the motor generator is rotated at a rotation speed with which the motor generator supplies high instantaneous current flowing during acceleration / deceleration of the electric actuator.

### Advantageous Effects of Invention

With the present invention, the electric actuator driver can respond to a transient high instantaneous current that flows during acceleration of an electric actuator, and the electric actuator driver can also be reduced in size and weight.

### Brief Description of Drawings

Fig. 1 is a block diagram illustrating the circuit configuration of an electric actuator driver according to a first embodiment of the present invention.
Fig. 2 is a flowchart illustrating the operation of a

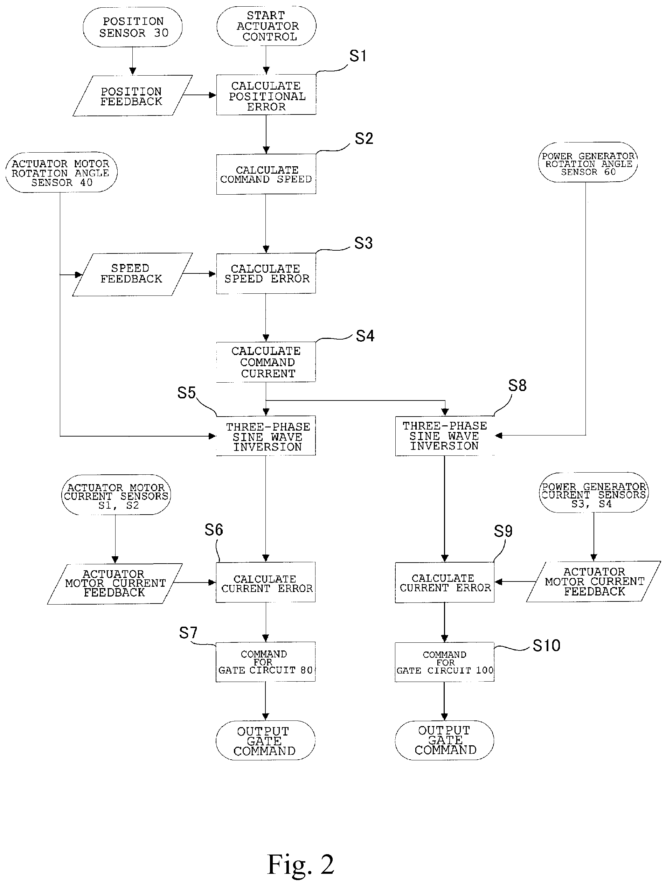

Fig. 2 is a flowchart illustrating the operation of a motor generator control system, which constitutes the electric actuator driver.

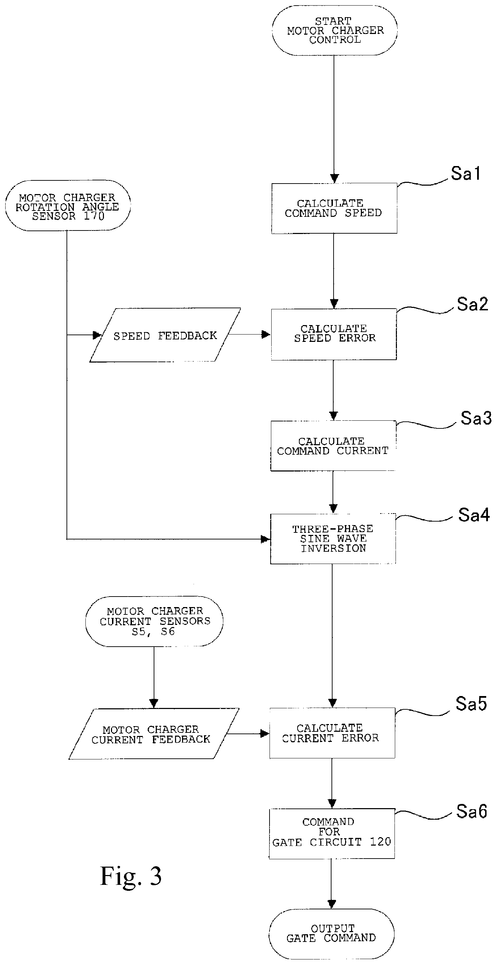

Fig. 3 is a flowchart illustrating the operation of a motor charger control system, which constitutes the electric actuator driver.

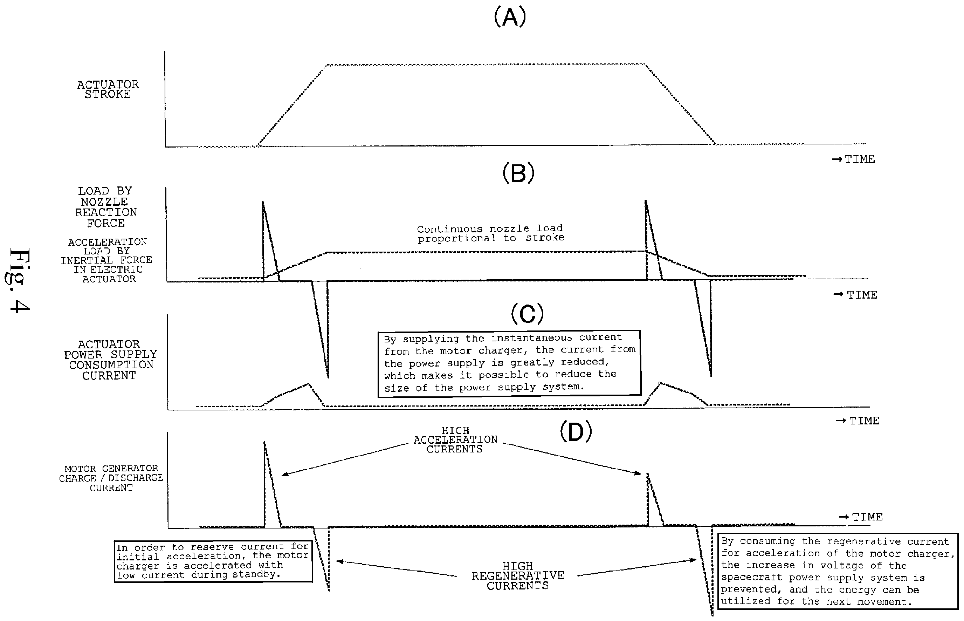

Fig. 4(A) is a graph illustrating the relationship between stroke and time of an electric actuator, Fig. 4(B) is a graph illustrating the relationship between load by nozzle reaction force and time as well as the relationship between acceleration load by inertial force in the electric actuator and time, Fig. 4(C) is a graph illustrating the relationship between consumption current of an electric actuator power supply and time, and Fig. 4(D) is a graph illustrating the relationship between charge / discharge current of a motor generator and time.

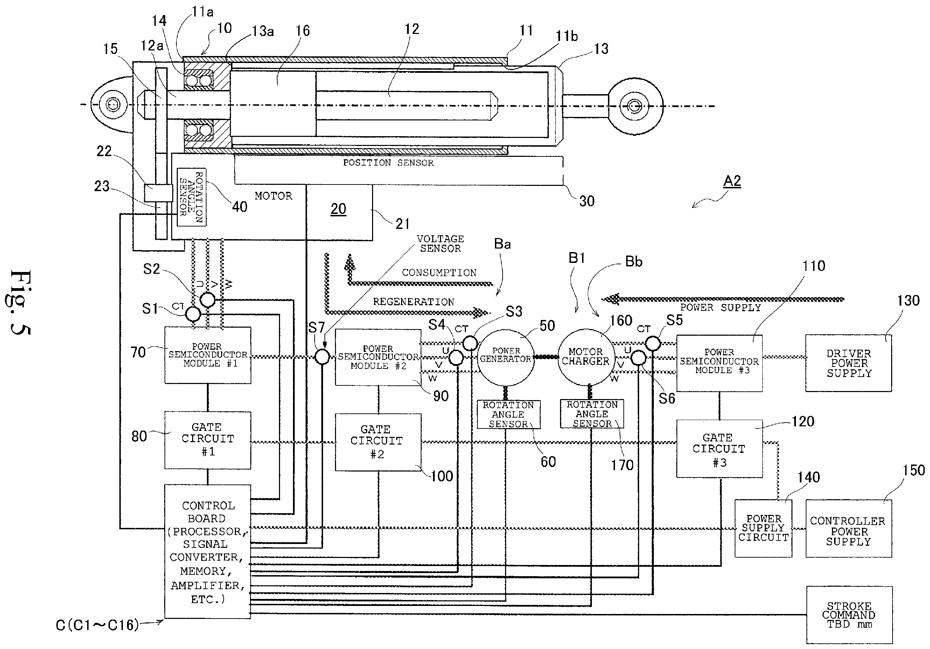

Fig. 5 is a block diagram illustrating a circuit configuration of an electric actuator driver according to a second embodiment of the present invention.

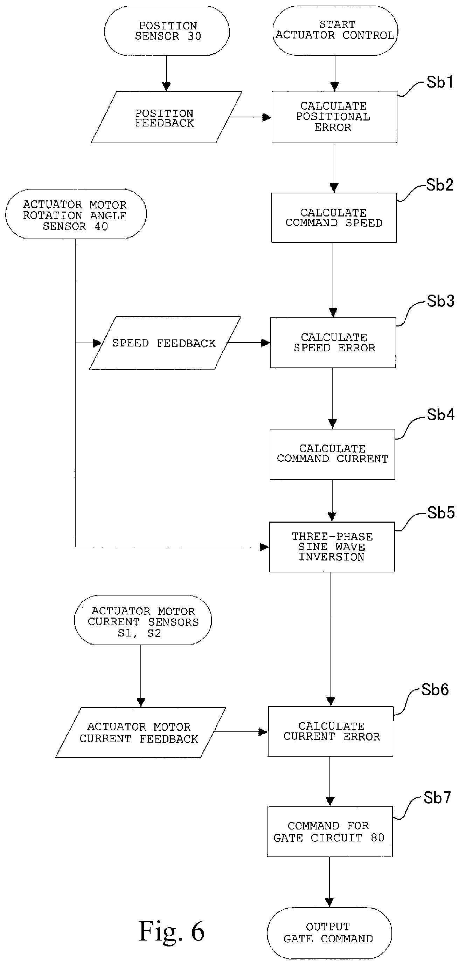

Fig. 6 is a flowchart illustrating the operation of a motor generator control system, which constitutes the electric actuator driver according to the second embodiment of the present invention.

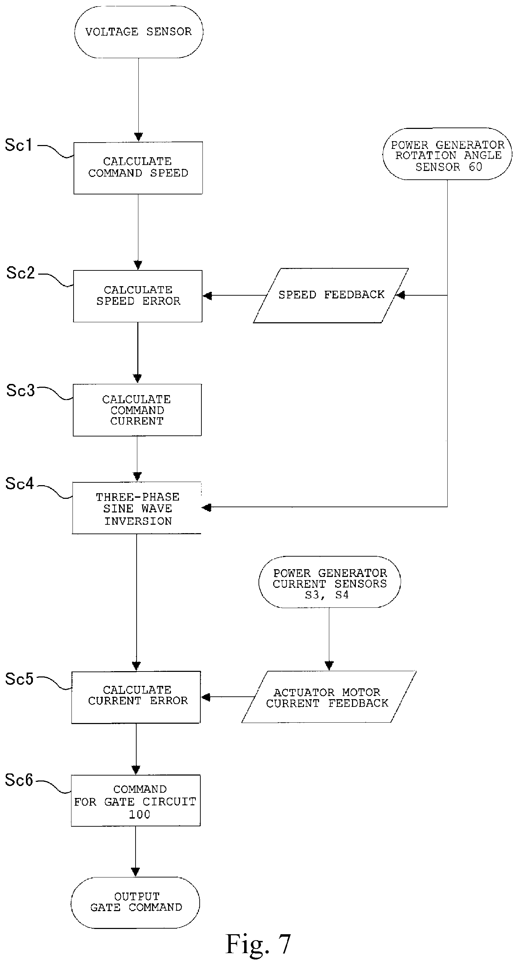

Fig. 7 is a flowchart illustrating the operation of a motor generator control system, which constitutes the electric actuator driver according to the second embodiment.

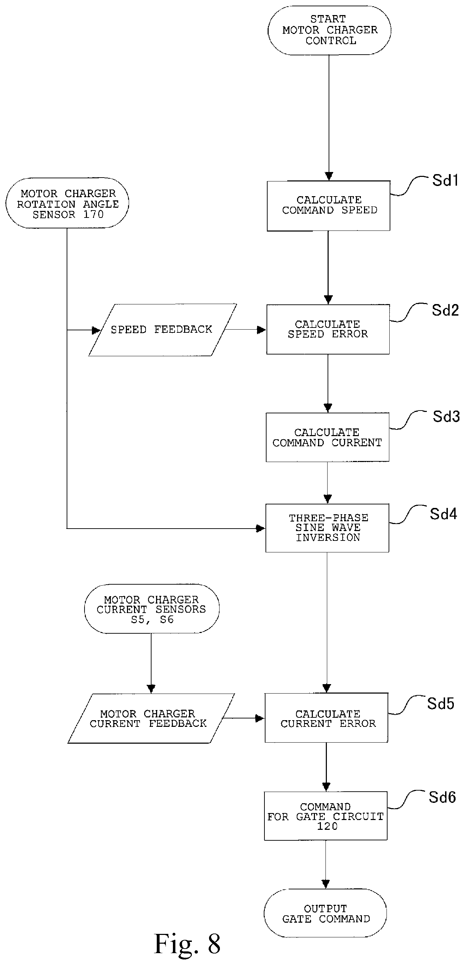

Fig. 8 is a flowchart illustrating the operation of a motor charger control system, which constitutes the electric actuator driver according to the second embodiment.

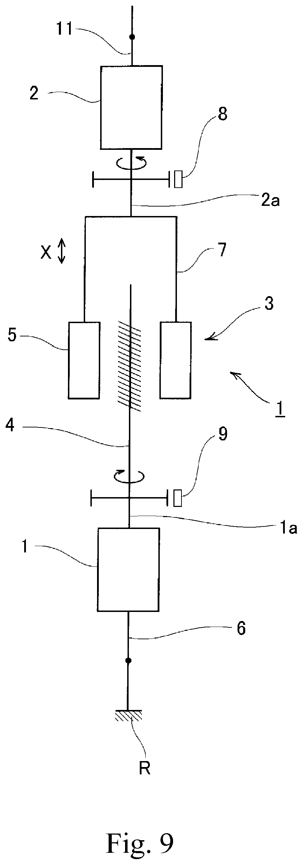

Fig. 9 is a view illustrating the configuration of the conventional electric actuator disclosed in Patent Literature 1.

### Description of Embodiments

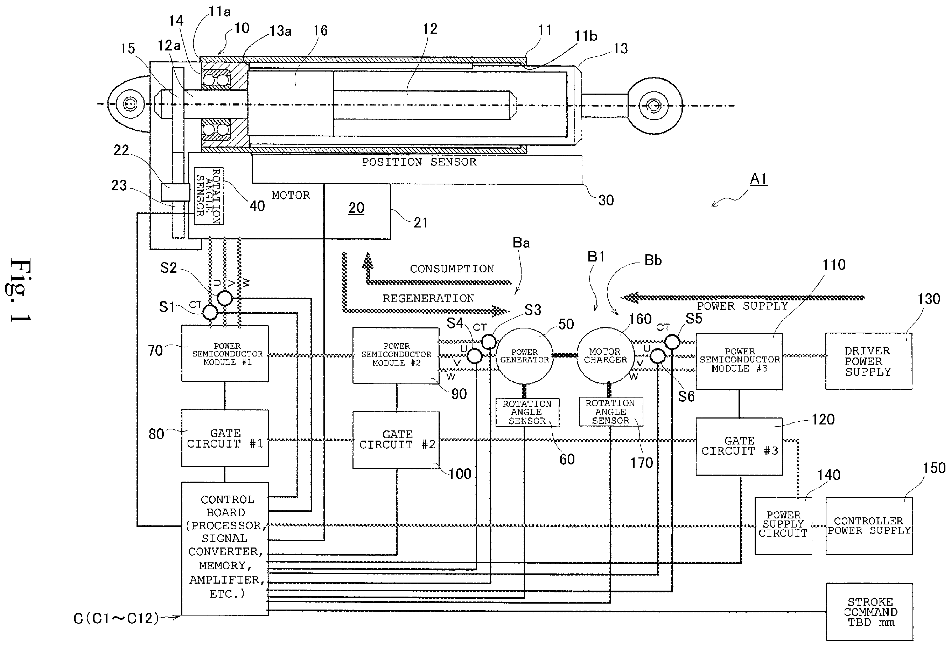

Hereinafter, embodiments of the present invention will be described while referring to the drawings. Fig. 1 is a block diagram illustrating the circuit configuration of an electric actuator driver according to a first embodiment of the present invention.

The electric actuator driver A1 according to the first embodiment of the present invention includes an electric actuator 10 and a driver control circuit B1 for driving the electric actuator 10, and is mounted and used in a spacecraft for example.

Specifically, it is used for, for example, deflecting a nozzle of a rocket motor or the like mounted on a spacecraft.

In the present embodiment, the electric actuator 10 employs an electric cylinder, which is one of electric linear actuators, and is provided with an actuator driving motor 20 using a three-phase AC servomotor, a position sensor 30 and a rotation angle sensor 40. In the following description, the electric actuator is referred to as an electric cylinder 10.

The electric cylinder 10 includes a cylinder body 11, a driving screw shaft 12 and an expandable rod 13.

The cylinder body 11 is formed in a cylindrical shape. A bearing 14 is fixed at a bottom end 11a of the cylinder body, and a top end 11b of the cylinder body has an opening.

The driving screw shaft 12 is slightly shorter than the overall length of the cylinder body 11, and is rotatably supported by the bearing 14 near a bottom end 12a of the driving screw shaft 12. A gear 15 is fixed at the bottom end 12a.

The expandable rod 13 has a cylindrical shape, and a columnar screw block 16, which is screwed with the driving screw shaft 12, is fixed to the bottom end opening 13a.

The position sensor 30 detects the position of the expandable rod 13 within the expansion range of the expandable rod 13, and is placed along with the cylinder body 11.

The rotation angle sensor 40 detects the rotation angle of the actuator driving motor 20.

These position sensor 30 and rotation angle sensor 40 are each connected to input ports of a controller C described below.

The actuator driving motor 20 includes a body 21 that is fixedly placed at the bottom end half of the cylinder body 11, and a gear 23, which is meshed with the gear 15, is fixed to an output shaft 22 sticking out from the cylinder body 11.

In the above-described configuration, the actuator driving motor 20 drives to expand / contract the expandable rod 13 through the gears 15, 23 and the driving screw shaft 12.

The driver control circuit B1 includes a motor generator control system Ba and a motor charger control system Bb.

The motor generator control system Ba includes the above-described rotation angle sensor 40, and further includes a motor generator 50, a rotation angle sensor 60, a power semiconductor module 70, a gate circuit 80, a power semiconductor module 90 and a gate circuit 100. In Fig. 1, the motor generator 50 is denoted as a power generator 50.

The motor charger control system Bb includes a power semiconductor module 110, a gate circuit 120, a driver power supply 130, a power supply circuit 140, a controller power supply 150, a motor charger 160 and a rotation angle sensor 170. The circuits of this control system are suitably connected to input / output ports of the controller C.

An input port of the controller C is also configured to receive a stroke command from the spacecraft.

First, the motor generator control system Ba will be described.

The power semiconductor module 70 drives the actuator driving motor 20 by means of an inverter, and is switched by the gate circuit 80 connected to the power semiconductor 70. The gate circuit 80 is connected to an output port of the controller C.

Among output lines U, V and W of the power semiconductor module 70, the U and V phases are respectively provided with current sensors S1 and S2, which are each connected to an input port of the controller C.

The power semiconductor module 90 drives the motor generator 50 by means of an inverter, and is switched by the gate circuit 100 connected to the power semiconductor 90.

The rotation angle sensor 60 detects the rotation angle of the motor generator 50, and is connected to an input port of the controller C.

Among output lines U, V and W between the power semiconductor module 90 and the motor generator 50, the U and V phases are respectively provided with current sensors S3 and S4, which are each connected to an input port of the controller C.

Next, the motor charger control system Bb will be described.

The motor charger 160 is rotated by the power semiconductor module 110, and is mechanically and directly coupled to the motor generator 50.

The power semiconductor module 110 drives the motor charger 160 by means of an inverter, and is switched with the gate circuit 120 connected to the power semiconductor 110.

The driver power supply 130 is a DC power supply of several hundred volts.

The gate circuit 120 is connected to the controller power supply 150 through the power supply circuit 140, and is also connected to an output port of the controller C.

The rotation angle sensor 170 detects the rotation angle of the motor charger 160, and is connected to an input port of the controller C.

Among output lines U, V and W between the power semiconductor module 110 and the motor charger 160, the U and V phases are respectively provide with current sensors S5 and S6. These current sensors S5 and S6 are each connected to an input port of the controller C.

The controller C is a main controller of this system, and includes a processor, a signal converter, a memory, an amplifier (all not illustrated) and the like. The controller C is also configured to receive a stroke command from the spacecraft in which the electric actuator driver is mounted.

The controller C of the present embodiment has the following functions.
(1) A function of calculating the positional error of the expandable rod 13 of the electric cylinder 10 to a stroke command from the spacecraft. This function is referred to as a "positional error calculating means C1".
   In the present embodiment, the positional error is calculated based on a feedback position from the position sensor 30.
(2) A function of calculating the expansion / contraction speed (command speed) of the expandable rod 13 of the electric cylinder 10 based on the calculated positional error. This function is referred to as an "expansion / contraction speed calculating means C2".
(3) A function of calculating the error in expansion / contraction speed of the expandable rod 13. This function is referred to as a "first expansion / contraction speed error calculating means C3".
   In the present embodiment, the error in expansion / contraction speed of the expandable rod 13 is calculated based on a feedback speed that is output from the rotation angle sensor 40, and the calculated command speed.
(4) A function of calculating a command current to be supplied to the electric cylinder 10 based on the calculated speed error of the expandable rod 13. This function is referred to as a "command current calculating means C4".
(5) A function of calculating the current error based on the calculated command current and the currents detected by the current sensors S1 and S2. This function is referred to as a "first current error calculating means C5".
(6) A function of calculating the current error based on the calculated command current and the currents detected by the current sensors S3 and S4. This function is referred to as a "second current error calculating means C6".
(7) A function of expanding / contracting the expandable rod 13 of the electric cylinder 10 based on the current error calculated by the first current error calculating means C5. This function is referred to as an "electric cylinder driving means C7".
(8) A function of rotating the motor generator 50 according to the current error calculated by the second current error calculating means C6. This function is referred to as a "motor generator driving means C8".
   Specifically, the motor generator 50 is rotated at a rotation speed with which the motor generator supplies a high instantaneous current flowing during acceleration / deceleration of the expandable rod 13 of the electric cylinder 10.
   "Instantaneous current" is consumption current of a power supply and regenerative current that flow while the expandable rod 13 of the electric cylinder 10 is accelerated / decelerated.
(9) A function of calculating a command speed that is given to the motor charger 160 so that the motor generator 50 rotates at a required rotation speed. This function is referred to as a "command speed calculating means C9".
(10) A function of calculating the error in rotational speed of the motor charger 160. This function is referred to as a "rotation speed error calculating means C10".
   In the present embodiment, the error in rotation speed of the motor charger 160 is calculated based on a feedback speed that is output from the rotation angle sensor 170, and the calculated command speed.
(11) A function of calculating a command current to be supplied to the electric cylinder 10 based on the rotation speed error of the motor charger 160 calculated by the rotation speed error calculating means C10. This function is referred to as a "command current calculating means C11".
(12) A function of rotating the motor charger 160 so that the motor generator 50 rotates at the required rotation speed. This function is referred to as a "motor charger driving means C12".

In the present embodiment, the motor charger 160 is driven to rotate through the gate circuit 120 and the power semiconductor module 120.

Specifically, the motor charger 160 is rotated at a rotation speed with which instantaneous current can be absorbed for several times. In other words, the motor charger 160 is rotated so that the motor generator 50 rotates at the required rotation speed.

Fig. 2 is a flowchart illustrating the operation of the motor generator control system Ba, and Fig. 3 is a flowchart illustrating the operation of the motor charger control system Bb. Fig. 4(A) is a graph illustrating the relationship between stroke and time of the electric actuator, Fig. 4(B) is a graph illustrating the relationship between load by nozzle reaction force and time as well as the relationship between acceleration load by inertial force in the electric actuator and time, Fig. 4(C) is a graph illustrating the relationship between power supply consumption current of the electric actuator and time, and Fig. 4(D) is a graph illustrating the relationship between charge / discharge current of a motor generator and time.

First, the operation of the motor generator control system Ba will be described according to the flowchart of Fig. 2.
Step 1 (abbreviated as S1 in Fig. 2, and so on): The positional error of the expandable rod 13 is calculated based on the expansion / contraction position of the expandable rod 13 that is output from the position sensor 30 and a stroke command that is output from the spacecraft.
Step 2: The expansion / contraction speed of the expandable rod 13 of the electric cylinder 10 is calculated based on the calculated positional error.
Step 3: The error in expansion / contraction speed of the expandable rod 13 is calculated based on the expansion / contraction speed of the expandable rod 13 that is determined based on the rotation angle that is output from the rotation angle sensor 40 as well as based on the calculated command speed of the expandable rod 13.
Step 4: A command current to be supplied to the actuator driving motor 20 is calculated based on the calculated speed error. In Fig. 2, the actuator driving motor is denoted as an "actuator motor".
Step 5: A three-phase sine wave inversion is made based on the rotation angle that is output from the rotation angle sensor 40 and the calculated command current.
Step 6: The error in current is calculated based on a feedback motor current from the current sensors S1 and S2 at the actuator driving motor 20 and the three-phase sine wave inverted in Step 5.
Step 7: A command is output to the gate circuit 80 based on the current error calculated in Step 6.
Step 8: A three-phase sine wave inversion is made based on the rotation angle detected by the rotation angle sensor 60 of the motor generator 50, and the command current calculated in Step 4.
Step 9: The error in current is calculated based on a feedback motor current detected by the current sensors S3 and S4 of the motor generator 50, and the three-phase sine wave inverted in Step 8.
Step 10: A command is output to the gate circuit 100 based on the current error calculated in step 9.

Next, the operation of the motor charger control system Bb will be described while referring to Fig. 3.
Step 1 (abbreviated as Sa1 in Fig. 3, and so on): A command speed is calculated, which is given to the motor charger 160 so that the motor generator 50 rotates at the required speed.
Step 2: The speed error of the motor charger 160 is calculated based on a feedback speed detected by the rotation angle sensor 170 of the motor charger 160 and the calculated command speed.
Step 3: A command current to be supplied to the motor charger 160 is calculated based on the calculated speed error.
Step 4: A three-phase sine wave inversion is made based on the rotation angle detected by the rotation angle sensor 170 of the motor charger 160 and the calculated command current.
Step 5: The error in current is calculated based on a feedback current detected by the current sensors S5 and S6 of the motor charger 160 and the calculated command speed.
Step 6: A command is output to the gate circuit 120 based on the current error calculated in Step 5.

With the electric actuator driver A1 having the above configuration, the following advantageous effects can be obtained.
- By keeping the motor generator 50 rotating, an electric energy is converted and stored in the form of mechanical energy. As illustrated in Figs. 4(A) to 4(D), in response to transient high instantaneous current that flows when the electric cylinder 10 starts to drive, the controller C controls the motor generator to reduce its rotation speed, so as to convert the rotational kinetic energy of the motor generator to electric power. As a result, the current supply from the driver power supply 130 can be greatly reduced.

That is, because the driver power supply is not required to have a large capacity for responding to such instantaneous current, the total system can be reduced in size and weight.
- Because batteries or capacitors are not used, the driver has a high resistance to environment.

Next, an electric actuator driver according to a second embodiment of the present invention will be described while referring to Figs. 5 to 7. Fig. 5 is a block diagram illustrating the circuit configuration of the electric actuator driver according to the second embodiment of the present invention, Fig. 6 is a flowchart illustrating the operation of a motor generator control system, and Fig. 7 is a flowchart illustrating the operation of a motor charger control system. The same components as those of the previously-described embodiment are referred by the same reference numbers, and the descriptions therefor are omitted.

The electric actuator driver A2 according to the second embodiment of the present invention has the same configuration as the above-described electric actuator driver A1 of the first embodiment, except that a voltage sensor S7 is provided on a power line between a semiconductor module 70 and a semiconductor module 90.

The voltage sensor S7 detects the output voltage of a loading path, and is connected to an input port of a controller C.

The controller C of the present embodiment has the following functions as well as the above-described functions.
(1) A function of calculating a command speed (command speed), at which a motor generator 50 rotates at a required rotation speed, based on the output voltage of the power semiconductor module 90 detected by the voltage sensor S7. This function is referred to as a "speed calculating means C13".
(2) A function of calculating the error in speed of the motor generator 50. This function is referred to as a "speed error calculating means C14".
   In the present embodiment, the error in speed of the motor generator 50 is calculated based on a feedback speed that is output from a rotation angle sensor 60 and the calculated command speed.
(3) A function of calculating a command current to be supplied to an electric cylinder 10 based on the calculated speed error of the motor generator 50. This function is referred to as a "command current calculating means C15".
(4) A function of calculating the current error based on the calculated command current and the currents detected by current sensors S3 and S4. This function is referred to as a "third current error calculating means C16".

The operation of a motor generator control system Bb of the present embodiment will be described while referring to Figs. 6 and 7.
Step 1 (abbreviated as Sb1 in Fig. 6, and so on): The positional error of an expandable rod 13 is calculated based on the expansion / contraction position of the expandable rod 13 that is output from a position sensor 30 and a command stroke output from the spacecraft.
Step 2: The expansion / contraction speed of the expandable rod 13 of an electric cylinder 10 is calculated based on the calculated positional error.
Step 3: The error in expansion / contraction speed of the expandable rod 13 is calculated based on the expansion / contraction speed of the expandable rod 13 that is obtained from the rotation angle that is output from a rotation angle sensor 40 as well as based on the calculated command speed of the expandable rod 13.
Step 4: A current to be supplied to the actuator driving motor 20 is calculated based on the calculated speed error.
Step 5: A three-phase sine wave inversion is made based on the rotation angle from the rotation angle sensor 40 and the calculated command current.
Step 6: The error in current is calculated based on a feedback motor current from current sensors S1 and S2 of an actuator driving motor 20, and the three-phase sine wave inverted in Step 5.
Step 7: A command is output to a gate circuit 80 based on the current error calculated in Step 6.

Next, the control using the voltage sensor S7, rotation angle sensor 60 and current sensor S3 will be described while referring to Fig. 7.
Step 1 (abbreviated as Sc1 in Fig. 7, and so on): A command speed, at which the motor generator 50 rotates at a required rotation speed, is calculated based on the voltage detected by the voltage sensor S7.
Step 2: The speed error is calculated based on the rotation speed of the motor generator 50 that is obtained from the rotation angle from the rotation angle sensor 60 of the motor generator 50, as well as based on the calculated command speed of the motor generator 50.
Step 3: A current to be supplied to the actuator driving motor 50 is calculated based on the calculated speed error.
Step 4: A three-phase sine wave inversion is made based on the rotation angle from the rotation angle sensor 60 and the calculated command current.
Step 5: The error in current is calculated based on a feedback motor current from the current sensors S3 and S4 of the motor generator 50 and the three-phase sine wave inverted in Step 5.
Step 6: A command is output to a gate circuit 100 based on the current error calculated in Step 5.

Next, the operation of a motor charger control system Bb will be described while referring to Fig. 8.
Step 1 (abbreviated as Sd1 in Fig. 8, and so on): A command speed, at which the motor generator 50 rotates at a required rotation speed, is calculated based on a stroke command that is output from the spacecraft.
Step 2: The positional error of the expandable rod 13 is calculated based on a feedback speed detected by a rotation angle sensor 170 of a motor charger 160 and the calculated command speed.
Step 3: A command current to be supplied to the motor charger 160 is calculated based on the calculated speed error.
Step 4: A three-phase sine wave inversion is made based on the rotation angle from the rotation angle sensor 170 of the motor charger 160 and the calculated command current.
Step 5: The current error of the expandable rod 13 is calculated based on a feedback current detected by current sensors S5 and S6 of the motor charger 160 and the calculated command speed.
Step 6: A command is that is output to a gate circuit 120 based on the current error calculated in Step 5.

With the electric actuator drivers A1 and A2 of the above-described embodiments, the following advantageous effects can be obtained.
- The drivers can respond to transient high instantaneous current that flows during acceleration of the electric actuator, while the drivers can also be reduced in size and weight.
- Since the power supply is connected in series to the electric actuator intervening the mechanical coupling, they can be insulated from each other. With this configuration, the current can be directly controlled while being monitored, and the current at the power supply can also be controlled easily. As a result, fluctuation of the voltage can be reduced.
- The voltage of the power supply can be boosted easily.
- The number of rotation sensors can be reduced, which can simplify the configuration of the driver. Furthermore, the number of bearings or the like can be reduced, which can contribute to the size reduction.

The present invention is not limited to the above-described embodiments, but the following changes and modifications may be made.
- The above-described embodiments employ an electric linear actuator as the electric actuator, but an electric rotary actuator may be employed instead.
- In the above-described embodiments, the thrust direction is deflected by operating a nozzle that is movable. The present invention is however not limited thereto.
- A single motor that is equipped with the ability to generate and charge electric power may be employed. By dividing the coil of the single motor into two coils, i.e. a generator coil and charger coil, the same advantageous effects can be obtained. Furthermore, with this configuration, either one of the rotation sensors 160 and 120 may be omitted.

### Reference Signs List

10 electric actuator
50 motor generator
160 motor charger
A1, A2 electric actuator drivers
C8 motor generator driving means
C12 motor charger driving means

## Claims

1. An electric actuator driver (A1, A2), comprising: an electric actuator (10); and a motor generator (50) to drive the electric actuator (10); wherein
the electric actuator driver (A1, A2) further comprises:
a motor generator driving means (C8) configured to rotate the motor generator (50) at a rotation speed with which the motor generator (50) supplies an instantaneous current which is consumption current of a power supply and regenerative current during acceleration / deceleration, that flows during acceleration / deceleration of the electric actuator (10).

2. The electric actuator driver (A1, A2) according to claim 1, further comprising: a motor charger (160) coupled to the motor generator (50) to rotate the motor generator (50); and
a motor charger driving means (C12) to rotate the motor charger (160) so that the motor generator (50) rotates at a required rotation speed.

3. The electric actuator driver (A1, A2) according to claim 1 or 2, wherein the motor charger driving means (C12) rotates the motor charger (160) at a rotation speed with which the instantaneous current can be absorbed for several times.

## Patentansprüche

1. Treiber (A1, A2) für einen elektrischen Stellantrieb, der Folgendes umfasst:
einen elektrischen Stellantrieb (10); und einen Motorgenerator (50) zum Antreiben des elektrischen Stellantriebs (10); wobei
der Treiber (A1, A2) für einen elektrischen Stellantrieb (A1, A2) ferner Folgendes umfasst:
ein Motorgeneratorantriebsmittel (C8), konfiguriert zum Drehen des Motorgenerators (50) mit einer Drehzahl, mit der der Motorgenerator (50) einen Momentanstrom zuführt, der Verbrauchsstrom einer Stromversorgung und regenerativer Strom beim Beschleunigen/Verlangsamen ist, der beim Beschleunigen/Verlangsamen des elektrischen Stellantriebs (10) fließt.

2. Treiber (A1, A2) für einen elektrischen Stellantrieb nach Anspruch 1, der ferner Folgendes umfasst: einen mit dem Motorgenerator (50) gekoppelten Motorlader (160) zum Drehen des Motorgenerators (50); und
ein Motorladerantriebsmittel (C12) zum Drehen des Motorladers (160), so dass der Motorgenerator (50) mit einer benötigten Drehzahl dreht.

3. Treiber (A1, A2) für einen elektrischen Stellantrieb nach Anspruch 1 oder 2, wobei das Motorladerantriebsmittel (C12) den Motorlader (160) mit einer Drehzahl dreht, mit der der Momentanstrom mehrere Male absorbiert werden kann.

## Revendications

1. Dispositif d'attaque d'actionneur électrique (A1, A2), comprenant : un actionneur électrique (10) ; et un moteur-générateur (50) pour attaquer l'actionneur électrique (10); dans lequel
le dispositif d'attaque d'actionneur électrique (A1, A2) comprend en outre :
un moyen d'entraînement de moteur-générateur (C8) configuré de façon à faire tourner le moteur-générateur (50) à une vitesse de rotation avec laquelle le moteur-générateur (50) fournit un courant instantané qui est le courant de consommation d'une alimentation en énergie et un courant de régénération durant l'accélération / la décélération, qui circule durant l'accélération / la décélération de l'actionneur électrique (10).

2. Dispositif d'attaque d'actionneur électrique (A1, A2) selon la revendication 1, comprenant en outre : un chargeur de moteur (160) couplé au moteur-générateur (50) pour faire tourner le moteur-générateur (50) ; et
un moyen d'entraînement de chargeur de moteur (C12) pour faire tourner le chargeur de moteur (160) de sorte que le moteur-générateur (50) tourne à une vitesse de rotation requise.

3. Dispositif d'attaque d'actionneur électrique (A1, A2) selon la revendication 1 ou la revendication 2, dans lequel le moyen d'entraînement de chargeur de moteur (C12) fait tourner le chargeur de moteur (160) à une vitesse de rotation avec laquelle le courant instantané peut être absorbé à plusieurs reprises.
